# EUROPEAN PATENT SPECIFICATION

(11) **EP 3 006 632 B1**
(45) Date of publication and mention of the grant of the patent: **29.03.2017**
(21) Application number: 15188862.5
(22) Date of filing: 08.10.2015
(51) Int. Cl.: E03C 1/298, F16K 15/14, E03D 11/00, E03F 5/042

(54) **ODOUR TRAP AND METHOD FOR POSITIONING THE ODOUR TRAP IN AN OUTLET PIPE**
GERUCHSVERSCHLUSS UND VERFAHREN ZUM POSITIONIEREN DES GERUCHSVERSCHLUSSES IN EINEM AUSLASSROHR
PIÈGE À ODEURS ET PROCÉDÉ POUR POSITIONNER LE PIÈGE À ODEURS DANS UN TUYAU DE SORTIE

(30) Priority: 10.10.2014 NL 2013615
(43) Date of publication of application: 13.04.2016
(73) Proprietor: Herikon B.V., 7601 PS Almelo (NL)
(72) Inventor: Hurink, Albertus Gerardus, 7601 PS Almelo (NL)
(74) Representative: Mink-Lindenburg, Charlotte Hildegard

(56) References cited:
- EP-A1- 1 577 450
- WO-A1-92/14888
- WO-A1-2009/017449
- WO-A1-2013/181766

## Description

The present invention relates to an odour trap for an outlet pipe for liquid.

An example of a known odour trap is a siphon with a water seal. The siphon can take diverse forms, the best known of which is a swan neck, but a bottle trap as design siphon is also known. The siphon has the drawback that the water seal can dry out because of the relatively small quantity of water which remains in a siphon, whereby a penetrating odour rises from the outlet pipe. The siphon further forms a cumbersome, visible part in the outlet pipe, which for aesthetic reasons is not desirable in a design decor.

The present invention has for its object to provide an odour trap which obviates these drawbacks.

The odour trap according to the invention has for this purpose the distinguishing measures that the odour trap comprises: a hollow holder for placing in the outlet pipe and a membrane of elastic material to be received in the holder, wherein the membrane is at least partially deformable under liquid pressure from a closing position, in which the membrane closes the passage of the holder, to a position allowing passage in which the membrane leaves clear the passage of the holder, wherein the membrane is provided with a fixing surface for fixing to the inner wall of the holder, this fixing surface forming part of a contact surface for contact with the holder which extends partially in longitudinal direction and partially in peripheral direction of the membrane, wherein the membrane is further provided with a deformable closing surface which connects in peripheral direction to the contact surface and which lies against the inner wall of the holder in the closing position so as to close the passage, wherein the membrane is further provided with a deformable surface for pressing away which can yield under liquid pressure, lies at an angle to the longitudinal axis of the holder and connects the closing surface to the fixing surface. Furthermore, the membrane is bag-like and the dimensions of the closing surface are smaller in longitudinal direction of the holder than half the largest diameter of the membrane.

Such an odour trap according to the preamble of claim 1 is known from WO2009/017449. In the known odour trap the membrane takes the form of a cylinder sawn off at an angle. A channel-like passage extends in the wall of the membrane for receiving a spigot which extends along the inner wall of the holder for the purpose of fixing the membrane in the holder.

In an optimal preferred embodiment the dimensions of the deformable closing surface in longitudinal direction of the holder amount to approximately a third of the largest diameter of the membrane.

Because of the bag-like or spout-like form the membrane tapers, i.e. away from the wall of the holder, and the membrane only has contact with the holder at the position of the contact surface, which is formed largely by the fixing surface, and the closing surface. The odour trap according to the invention will always function irrespective of the degree of use. The chosen dimensions of the closing surface are small such that the odour trap moreover has a self-cleaning action. In the closing position only little soiling is caught between the closing surface and the inner wall of the holder. The chosen dimensions of the closing surface are sufficiently large.

The odour trap can be received as replacement for a siphon in an outlet pipe of a (water) reservoir, such as an outlet pipe of a washbasin, sink, bathtub, washing machine, dishwasher, toilet, urinal, shower drain and so on, The odour trap is fully concealed from view.

According to the invention, the holder is provided at an outer end with a collar which defines the largest diameter of the holder and the membrane is provided at an outer end with a sealing ring for receiving with a sealing fit in the collar, wherein a part of the sealing ring forms the deformable closing surface. The co-acting sealing ring and collar ensure an optimal seal. The sealing ring functions as tensioning ring and opens only at a liquid pressure above a threshold value, and returns to the ring shape at a liquid pressure below the threshold value. A liquid flow which contributes toward the self-cleaning action occurs immediately after opening.

In a further preferred embodiment the odour trap comprises fixing means for releasably fixing the membrane in the holder. The odour trap according to the invention can hereby be arranged and, if necessary, replaced quickly and easily. In a practical preferred embodiment the fixing means comprise a point attachment situated on the fixing surface.

The invention also relates to a method for placing an odour trap according to the invention in an outlet pipe of a reservoir as replacement for a siphon.

The invention will now be discussed in more detail with reference to the drawings, in which
Figure 1A shows schematically a holder as part of the odour trap according to the invention;
Figure 1B shows a cross-section of the holder of figure 1A;
Figure 2A shows a membrane as part of the odour trap according to the invention;
Figure 2B shows a cross-section of the membrane of figure 2A;
Figure 2C shows the membrane in cross-section along the line B-B of figure 2B;
Figure 3A shows schematically an odour trap according to the invention;
Figure 3B shows a cross-section of the odour trap of figure 3A;
Figure 3C shows a partially cut-away view of the odour trap of figure 3A;
Figure 4A shows a cross-section of the odour trap of figure 3A in closing position; and
Figure 4B shows a cross-section of the odour trap of figure 3A in a position allowing passage.

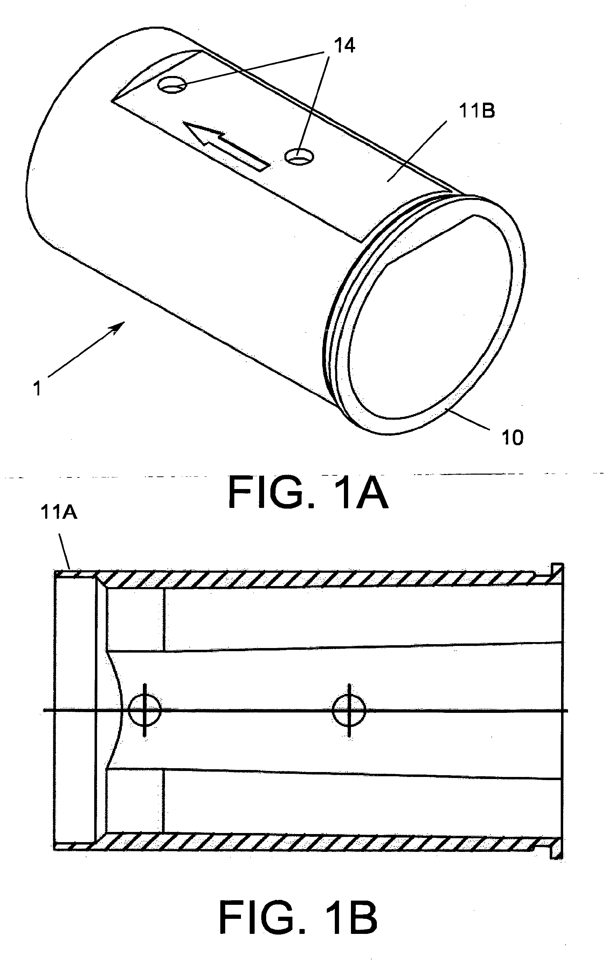

Figure 1A shows schematically a holder 1 of an odour trap according to the invention and figure 1B shows a cross-section of holder 1.

In the shown preferred embodiment the odour trap according to the invention serves to be received in an outlet pipe for liquid, for instance as replacement for a water seal or siphon.

Holder 1 is hollow and tubular with dimensions corresponding to the dimensions of an outlet pipe of for instance a washbasin. Holder 1 is provided at an outer end with a collar 10. In the shown preferred embodiment the diameter of collar 10 is larger than the diameter of holder 1. Holder 1 is provided with a flat upper side 11 B in which openings 14 are present for receiving a point attachment for membrane 2.

Holder 1 can be received sealingly in the outlet pipe by means of sealing means, for instance an O-ring.

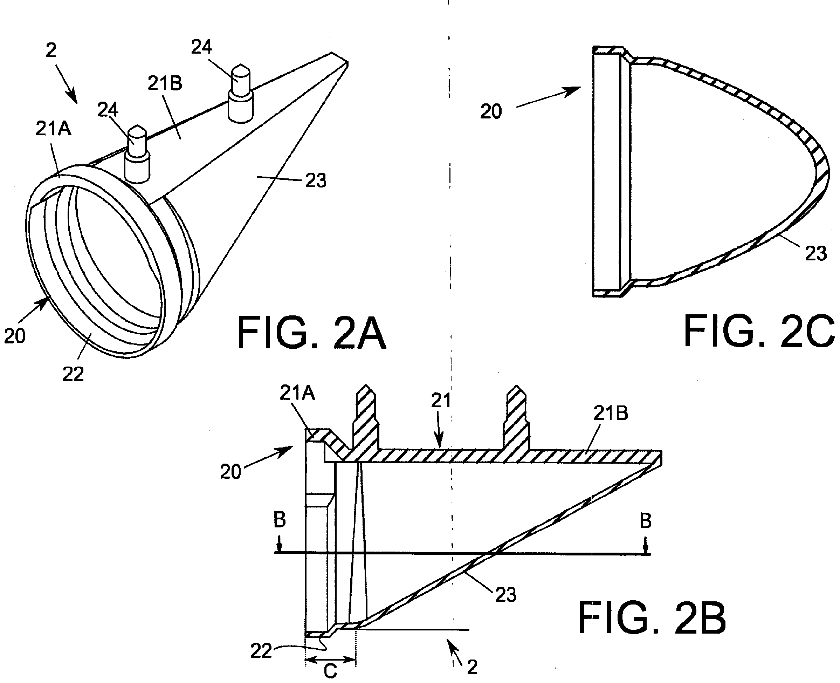

Figure 2A shows schematically a membrane 2 as part of an odour trap according to the invention to be received in holder 1. Membrane 2 is shown in cross-section in figure 2B. Figure 2C shows the membrane in cross-section along the line B-B of figure 2B.

Membrane 2 takes a bag-like or spout-like form and is manufactured from elastic material. Membrane 2 has three distinct surfaces with different functions. A contact surface 21 extends in the longitudinal direction of membrane 2 and in the shown preferred embodiment is embodied partially as a fixing surface 21 B. Part 21A of contact surface 21 extends partially in peripheral direction of membrane 2 and in the shown preferred embodiment takes a generally annular form. Fixing surface 21 B comprises fixing means 24 for releasably fixing the membrane 2 in holder 1. The fixing means comprise point attachments 24 to be received clampingly in openings 14 in holder 1. In the shown preferred embodiment fixing surface 21 B extends over substantially the whole length of membrane 2.

Membrane 2 is further provided with a closing surface 22 which connects in peripheral direction to part 21A of contact surface 21. Part 21A and closing surface 22 together form a sealing ring 20.

Membrane 2 is further provided with a surface for pressing away 23 which connects closing surface 22 to fixing surface 21 B. The surface for pressing away yields under liquid pressure and lies at an angle to a longitudinal axis of holder 1 in assembled state. This angle is preferably 25 ± 4 degrees.

Membrane 2 is generally triangular in cross-section, as can be clearly seen in figure 2B. The surface for pressing away 23 does not make contact with holder 1. Contact surface 21 makes contact with holder 1 and is formed by fixing surface 21B and part 21A of contact surface 21. Fixing surface 21 B is strip-like in the shown preferred embodiment. Part 21A of contact surface 21 is formed by a part of a ring in the shown preferred embodiment.

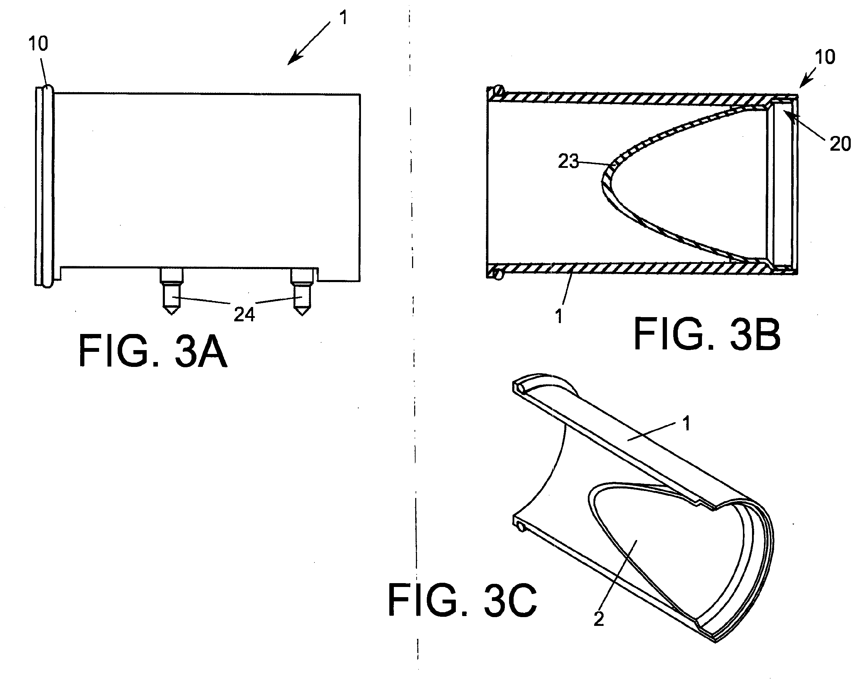

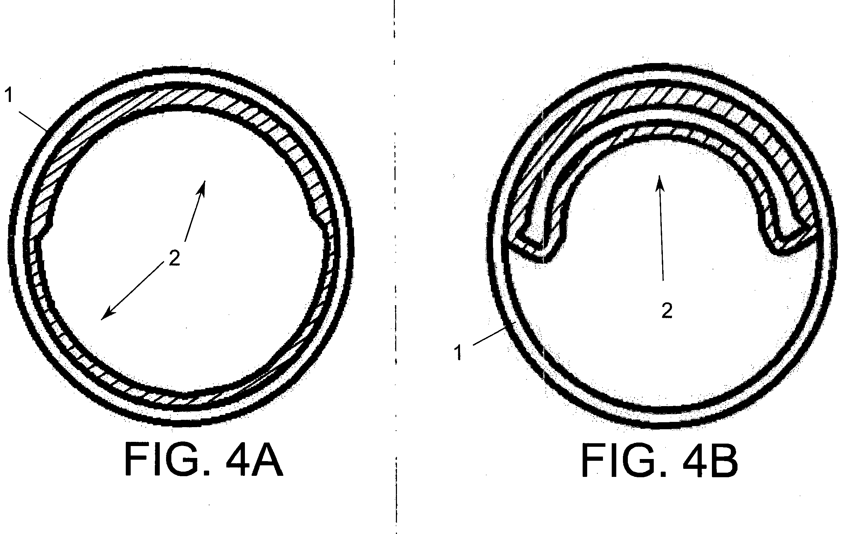

Figure 3A shows schematically an odour trap according to the invention which comprises holder 1 and membrane 2 in assembled state. The odour trap is shown in cross-section in figure 3B. Figure 3C shows a partially cut-away view of the odour trap of figure 3A. Membrane 2 is deformable under liquid pressure from a closing position, in which the membrane closes the passage of holder 1, to a position allowing passage in which membrane 2 leaves clear the passage of holder 1. In the closing position (shown in figure 4A) the closing surface lies against the inner wall of holder 1 in order to close the passage. In the position allowing passage (shown in figure 4B) the surface for pressing away 23 yields together with closing surface 23 from the wall of holder 1 and the membrane is folded double against contact surface 21 so as to thus provide free passage for the liquid.

An optimal seal is achieved in that sealing ring 20 is received with a sealing fit in collar 10. In the shown preferred embodiment collar 10 has a diameter larger than the diameter of the rest of holder 1. The collar connects via an inclining surface to the rest of holder 1. The inclining surface lies at an angle of between 30 and 60 degrees, preferably 45 degrees, to holder 1.

Shown in diverse figures is that the thickness of fixing surface 21 B is greater than the thickness of the deformable closing surface 22. The thickness of fixing surface 21 B is also greater than the thickness of the deformable surface for pressing away 23. The thickness of closing surface 22 and the thickness of the surface for pressing away 23 are substantially equal.

The membrane preferably comprises silicone material. The holder is preferably manufactured from thermoplastic material. With this material choice the odour trap according to the invention can withstand the conditions in an outlet pipe, such as (great) temperature differences and a soiled environment.

The dimensions C of the deformable closing surface 22 are smaller in longitudinal direction of holder 1 and membrane 2 than half the largest diameter of membrane 2. In the shown preferred embodiment the dimensions C of the deformable closing surface 22 in longitudinal direction of holder 1 amount to approximately a third of the largest diameter of membrane 2, which largest diameter is determined by the diameter of seal 20.

The invention therefore extends generally to any embodiment falling within the scope of the appended claims, as seen in the light of the foregoing description and drawings.

## Claims

1. Odour trap for an outlet pipe for liquid, comprising a hollow holder (1) for placing in the outlet pipe and a membrane (2) of elastic material to be received in the holder, wherein the membrane is at least partially deformable under liquid pressure from a closing position, in which the membrane closes the passage of the holder, to a position allowing passage in which the membrane leaves clear the passage of the holder, wherein the membrane is provided with a fixing surface (21 B) for fixing to the inner wall of the holder, this fixing surface forming part of a contact surface (21) for contact with the holder which extends partially in longitudinal direction and partially in peripheral direction of the membrane, wherein the membrane is further provided with a deformable closing surface (22) which connects in peripheral direction to the contact surface and which lies against the inner wall of the holder in the closing position so as to close the passage, wherein the membrane is further provided with a deformable surface for pressing away (23) which can yield under liquid pressure, lies at an angle to the longitudinal axis of the holder and connects the closing surface (22) to the fixing surface (21), wherein the membrane (2) is bag-like and the dimensions (C) of the closing surface (22) are smaller in longitudinal direction of the holder (1) than half the largest diameter of the membrane (2) **characterized in that** the holder (1) is provided at an outer end with a collar (10) which defines the largest diameter of the holder and wherein the membrane (2) is provided at an outer end with a sealing ring (20) for receiving with a sealing fit in the collar (10), wherein a part of the sealing ring forms the deformable closing surface (22).

2. Odour trap as claimed in claim 1, wherein the dimensions (C) of the deformable closing surface (22) in longitudinal direction of the holder (1) amount to approximately a third of the largest diameter of the membrane (2).

3. Odour trap as claimed in claim 1 or 2, wherein the thickness of the fixing surface (21 B) is greater than the thickness of the deformable closing surface (22).

4. Odour trap as claimed in claim 1 or 2, wherein the thickness of the fixing surface (21 B) is greater than the thickness of the surface for pressing away (23).

5. Odour trap as claimed in any of the foregoing claims, wherein the thickness of the deformable closing surface (22) and that of the deformable surface for pressing away (23) are substantially equal.

6. Odour trap as claimed in any of the foregoing claims, wherein the fixing surface (21 B) extends over substantially the whole length of the membrane (2).

7. Odour trap as claimed in any of the foregoing claims, wherein the odour trap comprises fixing means (24) for releasably fixing the membrane (2) in the holder (1).

8. Odour trap as claimed in claim 7, wherein the fixing means comprise a point attachment (24) situated on the fixing surface (21 B).

9. Odour trap as claimed in any of the foregoing claims, wherein the membrane (2) comprises silicone material.

10. Method for placing an odour trap as claimed in any of the foregoing claims in an outlet pipe of a reservoir as replacement for a siphon.

## Patentansprüche

1. Geruchsverschluss für ein Auslassrohr für Flüssigkeiten, umfassend eine hohle Halterung (1) zum Platzieren in dem Auslassrohr und eine Membran (2) aus elastischem Material zur Aufnahme in der Halterung, wobei die Membran unter Flüssigkeitsdruck zumindest teilweise aus einer Schließstellung, in der die Membran den Durchtritt der Halterung verschließt, in eine Passierstellung, in der die Membran den Durchgang in der Halterung freilässt, verformbar ist, wobei die Membran mit einer Befestigungsfläche (21 B) zur Befestigung an der inneren Wand der Halterung versehen ist, wobei diese Befestigungsfläche Teil einer Kontaktfläche (21) für den Kontakt mit der Halterung ist, die sich teilweise in Längsrichtung und teilweise in Umfangsrichtung zu der Kontaktfläche erstreckt, wobei die Membran ferner mit einer verformbaren Schließfläche (22) versehen ist, die sich in Umfangsrichtung mit der Kontaktfläche verbindet und in Schließstellung an der Innenwand der Halterung anliegt, um den Durchgang zu verschließen, wobei die Membran weiter mit einer verformbaren Wegdrückoberfläche (23) versehen ist, die unter Flüssigkeitsdruck nachgibt, in einem Winkel zur Längsachse der Halterung angeordnet ist und die Schließfläche (22) mit der Befestigungsfläche (21) verbindet, wobei die Membran (2) sackartig ist und die Dimensionen (C) der Schließfläche (22) in Längsrichtung der Halterung (1) kleiner sind als die Hälfte des größten Durchmessers der Membran (2), **dadurch gekennzeichnet, dass** die Halterung (1) an einem äußeren Ende mit einem Kragen (10) versehen ist, der den größten Durchmesser der Halterung definiert und wobei die Membran (2) an einem äußeren Ende mit einem Dichtring (20) zur Aufnahme einer Dichtpassung in dem Kragen (10) versehen ist, wobei ein Teil des Dichtrings die verformbare Schließfläche (22) ausbildet.

2. Geruchsverschluss nach Anspruch 1, wobei die Dimensionen (C) der verformbaren Schließfläche (22) in Längsrichtung der Halterung (1) etwa ein Drittel des größten Durchmessers der Membran (2) beträgt.

3. Geruchsverschluss nach Anspruch 1 oder 2, wobei die Dicke der Befestigungsfläche (21B) größer ist als die Dicke der verformbaren Schließfläche (22).

4. Geruchsverschluss nach Anspruch 1 oder 2, wobei die Dicke der Befestigungsfläche (21B) größer ist als die Dicke der Oberfläche der Wegdrückoberfläche (23).

5. Geruchsverschluss nach einem der vorhergehenden Ansprüche, wobei die Dicke der verformbaren Schließfläche (22) und der der verformbaren Wegdrückoberfläche (23) im Wesentlichen gleich sind.

6. Geruchsverschluss nach einem der vorhergehenden Ansprüche, wobei die Befestigungsfläche (21B) sich im Wesentlichen die gesamte Länge der Membran (2) erstreckt.

7. Geruchsverschluss nach einem der vorhergehenden Ansprüche, wobei der Geruchsverschluss Befestigungsmittel (24) zum lösbaren Befestigen der Membran (2) in der Halterung (1) umfasst.

8. Geruchsverschluss nach Anspruch 7, wobei die Befestigungsmittel einen Befestigungspunkt (24) umfassen, der auf der Befestigungsfläche (21B) angeordnet ist.

9. Geruchsverschluss nach einem der vorhergehenden Ansprüche, wobei die Membran (2) Silikonmaterial umfaßt.

10. Verfahren zum Platzieren eines Geruchsverschluss nach einem der vorhergehenden Ansprüche in einem Auslassrohr eines Vorratsbehälters als Ersatz für einen Siphon.

## Revendications

1. Piège à odeurs pour une conduite de sortie d'un liquide, comprenant un support creux (1) destiné à être placé dans la conduite de sortie et une membrane (2) en matériau élastique destinée à être reçue dans le support, la membrane pouvant être déformée au moins partiellement sous la pression du liquide pour passer d'une position de fermeture, dans laquelle la membrane ferme le passage du support, à une position permettant le passage et dans laquelle la membrane laisse libre le passage du support,
la membrane étant équipée d'une surface de fixation (21 B) pour la fixer à la paroi intérieure du support, cette surface de fixation faisant partie d'une surface de contact (21) pour la mettre en contact avec le support, surface de contact qui s'étend partiellement en direction longitudinale et partiellement en direction périphérique de la membrane, la membrane étant en outre pourvue d'une surface de fermeture déformable (22) qui la relie en direction périphérique à la surface de contact et qui s'appuie, dans la position de fermeture, contre la paroi intérieure du support de manière à fermer le passage, la membrane étant en outre équipée d'une surface pour repousser déformable (23) qui peut fléchir sous la pression du liquide, qui est placée en formant un angle par rapport à l'axe longitudinal du support et qui relie la surface de fermeture (22) à la surface de fixation (21), la membrane (2) étant semblable à un sac et les dimensions (C) de la surface de fermeture (22) étant inférieure en direction longitudinale du support (1) à la moitié du plus grand diamètre de la membrane (2), **caractérisé en ce que** le support (1) est muni à une extrémité extérieure d'un collier (10) qui définit le plus grand diamètre du support, et la membrane (2) est munie à une extrémité extérieure d'une bague d'étanchéité (20) destinée à être reçue dans un siège d'étanchéité situé dans le collier (10), une partie de la bague d'étanchéité formant la surface de fermeture déformable (22).

2. Piège à odeurs selon la revendication 1, dans lequel les dimensions (C) de la surface de fermeture déformable (22) dans la direction longitudinale du support sont d'environ un tiers du plus grand diamètre de la membrane (2).

3. Piège à odeurs selon la revendication 1 ou 2, dans lequel l'épaisseur de la surface de fixation (21 B) est supérieure à l'épaisseur de la surface de fermeture déformable (22).

4. Piège à odeurs selon la revendication 1 ou 2, dans lequel l'épaisseur de la surface de fixation (21 B) est supérieure à l'épaisseur de la surface pour repousser déformable (23).

5. Piège à odeurs selon l'une quelconque des revendications précédentes, dans lequel l'épaisseur de la surface de fermeture déformable (22) et celle de la surface pour repousser déformable (23) sont sensiblement égales.

6. Piège à odeurs selon l'une quelconque des revendications précédentes, dans lequel la surface de fixation (21 B) s'étend sensiblement sur toute la longueur de la membrane (2).

7. Piège à odeurs selon l'une quelconque des revendications précédentes, dans lequel le piège à odeurs comprend des moyens de fixation (24) pour fixer de manière amovible la membrane (2) dans le support (1).

8. Piège à odeurs selon la revendication 7, dans lequel les moyens de fixation comprennent un point de fixation (24) situé sur la surface de fixation (21 B).

9. Piège à odeurs selon l'une quelconque des revendications précédentes, dans lequel la membrane (2) comprend un matériau en silicone.

10. Procédé pour placer un piège à odeurs selon l'une quelconque des revendications précédentes dans une conduite de sortie d'un réservoir en remplacement d'un siphon.
